# EUROPÄISCHE PATENTSCHRIFT

(11) **EP 2 501 606 B1**
(45) Veröffentlichungstag und Bekanntmachung des Hinweises auf die Patenterteilung: **08.01.2014**
(21) Anmeldenummer: 10779772.2
(22) Anmeldetag: 12.11.2010
(51) Int. Cl.: B62K 3/00, A63B 22/00, A63B 22/06, A63B 23/035, A63B 22/20

(54) **Fitnessgerät**
Fitness device
Appareil de fitness

(30) Priorität: 20.11.2009 DE 102009053890
(43) Veröffentlichungstag der Anmeldung: 26.09.2012
(73) Patentinhaber: ActiveCross GmbH, 80539 München (DE)
(72) Erfinder: EISENBERG, Wolfgang, 53844 Troisdorf (DE)
(74) Vertreter: Bauer Vorberg Kayser Patentanwälte
(86) Internationale Anmeldenummer: PCT/EP2010/067410
(87) Internationale Veröffentlichungsnummer: WO 2011/061128

(56) Entgegenhaltungen:
- EP-A1- 1 982 908
- WO-A1-2008/132191
- US-A1- 2007 001 422

## Beschreibung

Die Erfindung betrifft ein mobiles Fitnessgerät das einen Rahmen aufweist, an dem zwei Vorderräder und ein Hinterrad angeordnet sind. Weiterhin betrifft die Erfindung eine Lenkvorrichtung eines solchen Fitnessgerätes.

So genannte Crosstrainer oder Ellipsentrainer sind aus dem Stand der Technik bekannt. Solche Trainingsgeräte simulieren durch gleichzeitigen Einsatz von Armen und Beinen eine ergonomische Laufbewegung, die ähnlich dem Bewegungsablauf des Nordic-Walkings ist. Durch den Bewegungsablauf bei stationären Crosstrainern wird ein Schwungrad rotierend angetrieben, welches beispielsweise durch eine Bremsvorrichtung über einen veränderlichen Widerstand verfügt. Da stationäre Trainingsgeräte über eine hohe Standfestigkeit verfügen müssen, weisen diese ein hohes Eigengewicht auf. Ein Transport solcher Crosstrainer ist somit schwer. Aus genanntem Grund sind Crosstrainer für ein Training in geschlossenen Räumen ausgestaltet.

Weiterhin geht beispielsweise aus der DE 203 19 128 U1 ein Trainingsgerät hervor, das ähnlich eines Crosstrainers mit Armen und Beinen betreibbar ist. Im Unterschied zu stationären Crosstrainern ist das Trainingsgerät als Fahrzeug ausgestaltet. Eine Lenkung erfolgt in der Regel über bewegliche, vorzugsweise dreh- und oder schwenkbare Griffe, welche über ein Lenksystem, beispielsweise über Bowdenzüge die Lenkung antreiben. Lenksysteme bergen potentiell das Risiko, dass mit den die beiden Lenkgriffe in jeweils entgegengesetzte Richtung betätigt werden können, was eine Lenkbewegung neutralisiert. =>vgl. A1.
Weiterhin sind fahrbare Crosstrainer bekannt, die durch eine Neigungslenkung lenkbar sind. Diese weisen den Nachteil auf, dass eine Neigung sehr leichtgängig ist, was zu einem instabilen Fahrverhalten führt.
W02008/132191 A1 offenbart ein mobiles Fitnessgerät mit Merkmalen des Oberbegriffs des Anspruchs 1.
Aufgabe ist es, ein mobiles Fitnessgerät zur Verfugung zu stellen, bei dem die mobile Nutzung bzw. das Fahrverhalten gegenüber bekannten mobilen Fitnessgeräten verbessert ist.

Die Aufgabe wird durch ein mobiles Fitnessgeräts nach Anspruch 1 gelöst. Weitere vorteilhafte Ausgestaltungen sind der nachfolgenden Beschreibung sowie den Unteransprüchen zu entnehmen. Die einzelnen Merkmale der beschriebenen Ausgestaltungen sind jedoch nicht auf diese beschränkt, sondern können mit anderen Merkmalen zu weiteren Ausgestaltungen kombiniert werden.

Das erfindungsgemäße mobile Fitnessgerät weist im Wesentlichen die folgenden Merkmale auf:
- einen Rahmen, an dem zwei Vorderräder und ein Hinterrad angeordnet sind,
- auf beiden Seiten des Rahmens je eine Antriebsvorrichtung, jeweils bestehend aus einer Armantriebsstange, die gelenkig mit einer Beinantriebsstange verbunden ist, wobei die Beinantriebsstangen ein Drehmoment über ein Getriebe auf das Hinterrad übertragen,
- eine Lenkvorrichtung zur Lenkung des Fitnessgerätes durch Neigung des Rahmens,
- eine durch Dämpfungselemente gebildete Neigungs/Lenkungsdämpfung, die zwischen den Vorderrädern und dem Rahmen angeordnet ist, wobei eine Seite der Dämpfungselemente jeweils an einer Radaufhängung angeordnet ist.
Besonders vorteilhaft ist die fehlerfreie Lenkung, die durch die Lenkvorrichtung ermöglicht wird. Eine Verlagerung des Gewichts bewirkt eine Neigung des Rahmens, wodurch die Lenkvorrichtung derart bewegt wird, dass ein Lenkausschlag zumindest der Vorderräder in Richtung der Gewichtsverlagerung erfolgt.

Das Trainingsgerät verfügt über zwei Antriebsvorrichtungen, die zwei gelenkig miteinander verbundenen Armantriebsstangen und Beinantriebsstangen umfassen. Die Armantriebsstangen sind derart ausgestaltet, dass diese mit Händen greifbar sind und eine Antriebsbewegung durch Bewegung der Arme und/oder des Oberkörpers generiert wird. Die Beinantriebsstangen sind derart ausgestaltet, dass ein Benutzer des Fitnessgerätes auf diesen stehen kann und durch Bewegung der Beine eine Kraft auf den Antrieb ausübt. Vorzugsweise weisen die Beinantriebsstangen Trittflächen für die Füße des Benutzers auf, denkbar sind aber auch Pedale. Der Antrieb wird durch einen vorzugsweise gleichmäßigen und ergonomischen Bewegungsablauf der Arme und Beine belastet und bewegt. Weiterhin hat es sich als besonders Gelenk schonend herausgestellt, zirkuläre Bewegungen auszuführen, wie sie das vorgeschlagene Fitnessgerät verlangt. Vorzugsweise ist der Abstand der Trittflächen zueinander derart gewählt, dass ein besonders ergonomischer Bewegungsablauf gewährleistet ist. Beispielsweise beträgt der lichte Abstand der Trittflächen nicht mehr als 30 Zentimeter. In einer bevorzugten Ausgestaltung ist ein Abstand der Trittflächen und/oder ein Winkel der Längsachsen der Trittflächen zueinander verstellbar.

Die Antriebsvorrichtungen sind an einem Rahmen angeordnet, der beispielsweise Längsrohre aufweist, die wiederum mit zwei Vorderrädern und einem Hinterrad verbunden sind. Die beiden Vorderräder sind vorzugsweise über eine Vorderachse miteinander verbunden. In einer weiteren bevorzugten Ausgestaltung sind Radaufhängungen, die insbesondere beweglich ausgestaltet sind, an der Vorderachse angeordnet. In einer weiteren Ausgestaltung ist vorgesehen, dass die Vorderachse an dem Rahmen angelenkt ist. Der Rahmen, der beispielsweise bei einer Geradeausfahrt senkrecht zur Vorderachse steht, kann auf diese Weise aus einer senkrechten Ebene geneigt werden. Bei Geradeausfahrt oder in unbelasteter Ruhelage des Fitnessgerätes befindet sich der Rahmen in einer senkrechten Ebene. Die senkrechte Ebene erstreckt sich entlang der Längsachse des Rahmens. Weiterhin befindet sich der Kraftvektor der Gravitation auf der senkrechten Ebene. Vorzugsweise ist eine horizontale Ebene, die durch die Auflagepunkte der Räder definiert ist, senkrecht zur senkrechten Ebene angeordnet. Weiterhin bevorzugt ist die Vorderachse in einer horizontalen Ebene angeordnet.

Durch die Neigung des Rahmens wird mittels der Lenkvorrichtung ein Lenkausschlag der Vorderräder erzwungen.

Ähnliche Fitnessgeräte gehen aus der WO 2008/132191 A1 vom gleichen Anmelder hervor, auf die im Rahmen dieser Offenbarung vollständig verwiesen wird.

Ein Unterschied zu dem in der WO 2008/132191 A1 vorgeschlagenen Fitnessgerät ist, dass die vorliegende Erfindung eine durch Dämpfungselemente gebildete Neigungs- und/oder Lenkungsdämpfung aufweist, die zwischen den Vorderrädern und dem Rahmen angeordnet ist. Pendelbewegungen, die insbesondere durch eine Bewegung eines Oberkörpers eines Benutzers ausgelöst werden, können mit der Neigungsdämpfung wirksam gedämpft werden. Dies erhöht die Stabilität insbesondere bei einer Geradeausfahrt und somit die Sicherheit des Fitnessgeräts im mobilen Einsatz. In einer vorteilhaften Ausgestaltung ist vorgesehen, dass in einer Gelenkaufhängung, die zwischen Rahmen und Vorderachse angeordnet ist, ein zusätzliches Dämpfungselement angeordnet ist. Es ist möglich, nur an einem Vorderrad ein Dämpfungselement vorzusehen, in der Regel werden aber beide Vorderräder über jeweils ein Dämpfungselement gedämpft.

Erfindungsgemäß ist vorgesehen, dass eine Seite der Dämpfungselemente jeweils an einer Radaufhängung angeordnet ist. Insbesondere endet eine Seite eines Dämpfungselements in der Nähe einer Nabe des korrespondierenden Rades. Vorzugsweise ist eine Seite des Dämpfungselements nahe der Radachse angeordnet. Das bedeutet, dass ein Abstand zur Radachse oder deren gedachter Verlängerung nicht größer ist als 10 Zentimeter, vorzugsweise kleiner als 5 Zentimeter ist. Auch ist in einer Ausgestaltung der Abstand zur Radnabe nicht größer ist als 10 Zentimeter, vorzugsweise kleiner als 5 Zentimeter. In einer weiteren Variante ist vorgesehen, dass zwischen der Radaufhängung und dem Dämpfungselement ein Übertragungselement angeordnet ist. Das Übertragungselement ist vorzugsweise eine Stange oder ein sonstiges starres Bauteil, das zwischen Radaufhängung und einer Seite des Dämpfungselementes angeordnet ist. In einer besonders bevorzugten Ausgestaltung ist ein Kolbenstoßdämpfer als Dämpfungselement vorgesehen, wobei dessen Kolbenstange radseitig angeordnet ist. Alternativ kann auch der Zylinderkolben radseitig angeordnet sein.

Eine weitere Ausgestaltung sieht vor, dass zumindest ein Dämpfungsparameter der Dämpfungselemente einstellbar, vorzugsweise regelbar ist. Beispielsweise kann eine Druckstufe und/oder einer Zugstufe des Dämpfers eingestellt werden. Vorzugsweise kann eine Dämpferhärte eingestellt werden. Weiterhin bevorzugt erfolgt eine Einstellung eines Dämpfungsparameters über eine Bypassleitung. Weiterhin ist in einer Variante vorgesehen, dass ein Querschnitt eines Ölkanals veränderlich ist. Vorzugsweise erfolgt eine Einstellung mittels zumindest einer Stellschraube. Auch ist in einer Ausgestaltung vorgesehen, dass die Dämpfungselemente austauschbar sind. Die Dämpfung kann linear oder progressiv ausgelegt sein. Beispielsweise kann ein Progressionsverhalten des Dämpfers eingestellt werden. Das Einstellen von zumindest einem Dämpfungsparameter hat den Vorteil, dass eine Anpassung des Fahrverhaltens beziehungsweise des Lenkverhaltens auf ein Körpergewicht eines Benutzers eingestellt werden kann. Weiterhin kann das Dämpfungsverhalten auf einen zu befahrenen Untergrund eingestellt werden. So ist beispielsweise für glatte Straßenbeläge ein anderes Dämpfungsverhalten notwendig als für unebene Feldwege.

Eine weitere Variante sieht vor, dass die Dämpfungselemente einen Neigungsanschlag umfassen. Beispielsweise wird ein Neigungsanschlag durch eine maximale Eintauchtiefe beziehungsweise einem maximalen Auszug des jeweiligen Dämpfungselementes bestimmt. Auch ist vorgesehen, dass eine zusätzliche Vorrichtung in oder außerhalb des Kolbenzylinders vorgesehen ist, die einen Anschlag bewirken. Vorzugsweise wird die Bewegung der Kolbenstange durch den Neigungsanschlag eingeschränkt. In einer bevorzugten Variante ist der Neigungsanschlag einstellbar. Weiterhin sieht eine Ausgestaltung vor, dass der Rahmen um 5° bis 20°, vorzugsweise um 10° bis 15° vorzugsweise 11° aus einer senkrechten Ebene, die sich entlang einer Längsachse des Fitnessgeräts erstreckt, neigbar ist.

In einer weiteren Ausgestaltung umfasst das Fitnessgerät einen Rückstellmechanismus, zur Rückstellung des Rahmens in die senkrechte Ebene. Insbesondere weist das Dämpfungselement ein geeignetes Federelement auf, das eine Rückstellung in eine aufrechte Position, also in den Gradeauslauf unterstützt. In einer Weiterbildung ist vorgesehen, dass das Rückstellelement ein Federelement umfasst. Das Federelement ist in einer Ausgestaltung eine Spiralfeder. In einer weiteren Ausgestaltung ist das Federelement eine Blattfeder. Besonders bevorzugt ist vorgesehen, dass das Federelement eine Luftfeder ist. Der Luftfederdämpfer hat den Vorteil, dass dieser sowohl Dämpfungseigenschaften als auch Federeigenschaften aufweist. Insbesondere wirkt der Luftfederdämpfer als Rückstellelement. In einer weiteren Ausgestaltung ist vorgesehen, dass der Rückstellmechanismus mehrere oder eine Kombination von Federelementen aufweist, beispielsweise eine Spiralfeder und eine Luftfeder. Vorzugsweise umfasst ein beispielsweise hydraulischer Kolbendämpfer eine im Kolbenzylinder angeordnete Feder als Rückstellelement. Grundsätzlich kann der Rückstellmechanismus durch verschiedene geeignete Vorrichtungen gebildet sein, die genannten Beispiele sollen die Erfindung nicht auf diese beschränken.

In einer besonders vorteilhaften Ausführungsvariante ist die Neigungslenkung bzw. der Rückstellmechanismus derart ausgeführt, dass ein Neigen um einen Drehpunkt erfolgt, der möglichst oberhalb zumindest des horizontalen Abschnitts des Rahmens angeordnet ist. Die Trittflächen befinden sich in ihrer unteren, dem Untergrund nächsten Position ebenfalls unterhalb des Drehpunkts. Hierdurch wird erreicht, dass die Rückstellung des Rahmens in die Vertikale bzw. aufrechte Position durch die Masse unterhalb des Drehpunkts unterstützt wird. Dadurch, dass das Körpergewicht über die Trittflächen unterhalb des Drehpunkts wirkt, ist das Fahrverhalten des Fitnessgeräts ruhiger und stabiler. Die Rückstellung in die aufrechte Position erfolgt gleichmäßig, was gerade bei schneller Fahrt und engen Kurven vorteilhaft ist.

Eine besonders vorteilhafte Weiterentwicklung besteht in der Integration einer Gangschaltung, über die die Übersetzung des Antriebs einstellbar ist. Ähnlich einem Fahrrad kann somit eine Anpassung an das Gelände und/oder die Kraft des Benutzers sowie an die Geschwindigkeit erfolgen.

Beispielsweise zum einfachen Transport oder zum Verstauen des Fitnessgerätes weist der Rahmen des Fitnessgerätes einen oder mehrere vorzugsweise arretierbaren Klappmechanismen auf. Der Klappmechanismus umfasst vorzugsweise ein Scharnier, das beispielsweise derart angeordnet ist, dass Einzelteile des Rahmens in der Ebene des Rahmens zueinander umklappbar sind. Es können mehrere Klappmechanismen oder Scharniere vorgesehen sein, um ein möglichst Platz sparendes Zusammenklappen des Fitnessgeräts zu ermöglichen. Wie

In einer weiteren vorteilhaften Ausgestaltung umfasst das Fitnessgerät eine Dauerbremse, mittels der ein Fahrtwiderstand einstellbar ist. Vorzugsweise ist die Dauerbremse in ihrer Intensität regulierbar. Die Dauerbremse erhöht im mobilen Betrieb des Fitnessgerätes eine Trainingseffizienz. Besonders bevorzugt ist, dass die Dauerbremse lösbar am Fitnessgerät angeordnet ist.

Weiterhin sieht eine Ausgestaltung vor, dass zumindest das Hinterrad mittels eines Ständers anhebbar ist, so dass der Fitnesstrainer stationär nutzbar ist. Der Ständer, auf dem das Fitnessgerät für den stationären Betrieb in einer Ausgestaltung aufsetzbar ist, kann so wesentlich kleiner und Platz sparender ausgestaltet sein als beispielsweise ein Rollentrainer, der in der Regel ein Schwungrad benötigt. Die Dauerbremse ist in einer Ausgestaltung eine hydrodynamische Strömungsbremse oder eine Wirbelstrombremse.

Vorzugsweise ist eine Einstellung von zumindest einem Dämpfungsparameter des ersten und/oder des zweiten Dämpfungselementes möglich. Beispielsweise ist eine Einstellung in Abhängigkeit von einem gewählten Gang, einer Geschwindigkeit und/oder einem Körpergewicht eines Benutzers vorgesehen. Vorzugsweise kann die Einstellung des Dämpfungsparameters automatisch erfolgen. Beispielsweise ist in einer Ausgestaltung vorgesehen, dass mittels eines Wiegemechanismus ein Körpergewicht eines Benutzers ermittelt wird und eine Einstellung des Dämpfungsparameters automatisch erfolgt. In einer weiteren Ausgestaltung ist vorgesehen, dass die Gangschaltung mit dem ersten und/oder zweiten Dämpfungselement verbunden ist und durch Schalten der Gangschaltung automatisch der Dämpfungsparameter des ersten und/oder zweiten Dämpfungselementes angepasst wird.

In einer Ausgestaltung ist das Dämpfungselement ein Kolbendämpfer mit einer maximalen Länge von 240 Millimeter bis 260 Millimeter. In einer Ausgestaltung weist der Kolbendämpfer einen Hub von 40 Millimeter bis 50 Millimeter auf, vorzugsweise etwa 44 Millimeter. Weiterhin sieht eine Variante vor, dass bei einer Kolbenstangenbewegung von 350 Millimetern pro Sekunde der Dämpfer eine Kraft von 2000 Newton ausübt. Je nach Bedarf und Anwendung sind aber auch andere Abmessungen möglich. Abhängig von der Kolbendämpferlänge und dem Hub ergeben sich Bewegungsweg, die Frequenz und Kraft, welche der Dämpfer ausübt.

Das mobile Fitnessgerät kann nicht nur als fahrradverwandtes Fortbewegungsmittel, sondern auch stationär verwendet werden. Für die stationäre Verwendung kann beispielsweise ein so genannter Rollentrainer verwendet werden, der gebremste Laufrollen aufweist. Sowohl beim stationären Gebrauch als auch bei Verwendung des Trainingsgerätes als Fortbewegungsmittel, werden Beinmuskulatur und Oberkörpermuskulatur beansprucht und trainiert.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1: ein Fitnessgerät;
- Fig. 2: eine Detailansicht eines Fitnessgeräts;
- Fig. 3: eine weitere Detailansicht des Fitnessgeräts;
- Fig. 4: eine Prinzipskizze einer Neigungslenkung eines Fitnessgeräts;
- Fig. 5: ein Dämpfungselement; und
- Fig. 6: eine Detailansicht einer Lenkvorrichtung;

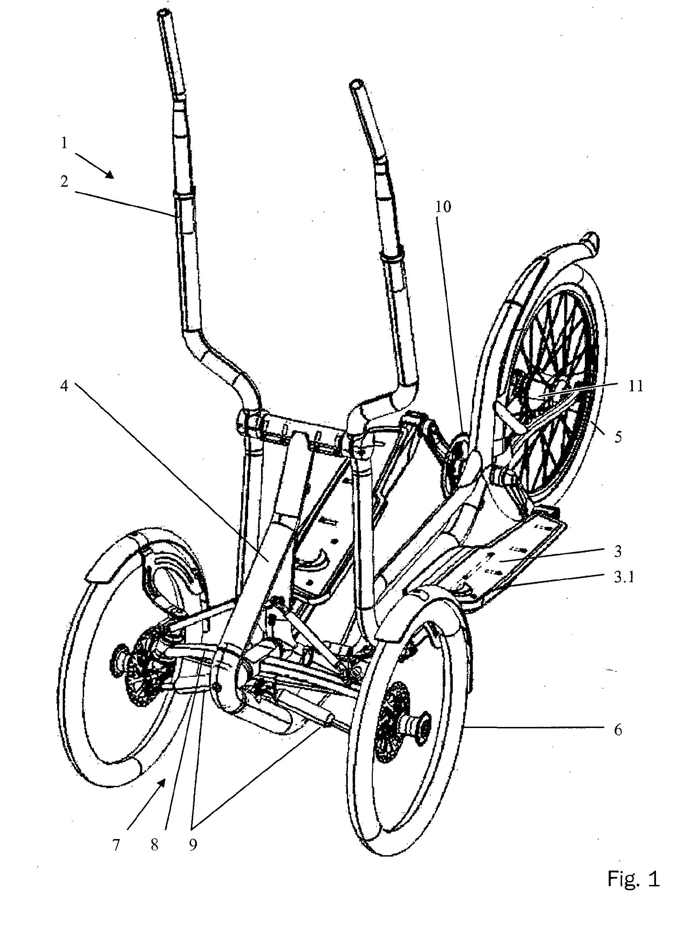

Fig. 1 zeigt ein Fitnessgerät 1 in Form eines fahrbaren Crosstrainers mit Armantriebsstangen 2 und Beinantriebsstangen 3, die beidseitig eines Rahmens 4 angeordnet sind. Auf den Beinantriebsstangen 3 sind Trittflächen 3.1 angeordnet, die einen festen Stand eines Benutzers bei einer Nutzung des Fitnessgeräts 1 ermöglichen.

Das Fitnessgerät 1 weist in der gezeigten Ausgestaltung ein Hinterrad 5 und zwei Vorderräder 6 auf. Eine Lenkvorrichtung 7 erzwingt einen Lenkausschlag der an der Vorderachse 8 aufgehängten Vorderräder 6. Deutlich zu erkennen sind die Dämpfungselemente 9, die zwischen Rahmen 4 und Vorderrädern 6 angeordnet sind. Die Dämpfungselemente 9 sind in der gezeigten Ausgestaltung als Kolbendämpfer ausgestaltet.

Weiterhin zeigt Fig. 1, dass die Beinantriebsstangen 3 mit einem Zahnkranz 10, im gezeigten Ausführungsbeispiel über eine Kurbel, derart verbunden sind, dass ein Moment, erzeugt durch Kraftaufbringung auf die Beinantriebsstangen 3, auf den Zahnkranz 10 aufgebracht werden kann. Über eine hier nicht gezeigte Kette oder einen Riemen wird ein Moment auf das Hinterrad übertragen. In einer Ausgestaltung weist die Hinterradnabe 11 einen hier nicht weiter dargestellten Dynamo, vorzugsweise Nabendynamo auf. Weiterhin ist in einer Ausgestaltung vorgesehen, dass die Hinterradnabe 11 eine Dauerbremse umfasst, die vorzugsweise nach Bedarf zuschaltbar ist. Weiterhin bevorzugt ist die Bremskraft der Dauerbremse regulierbar.

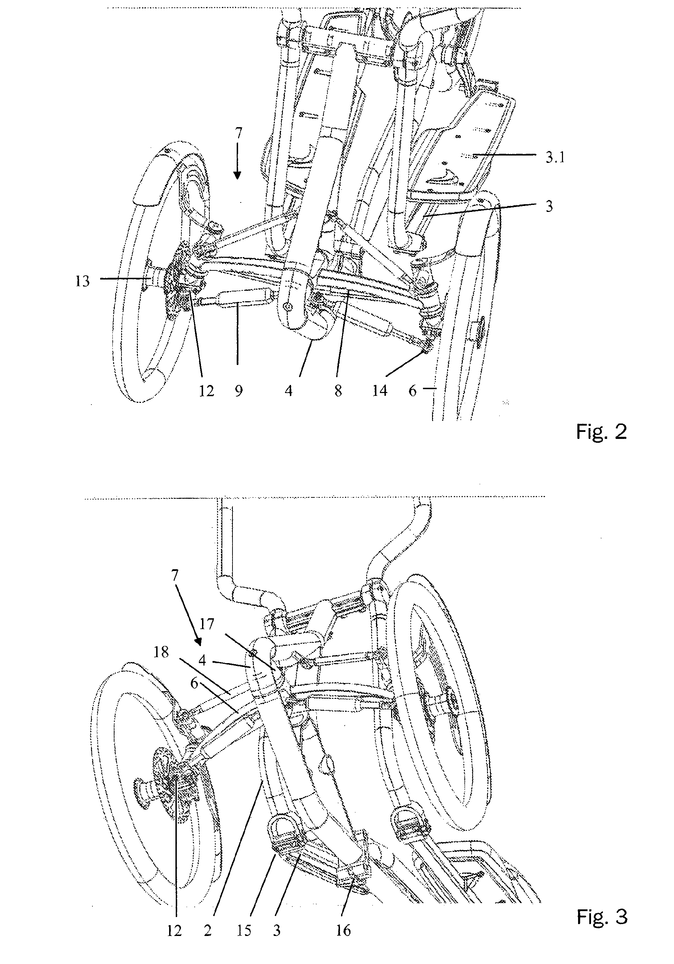

Fig. 2 zeigt eine Detailansicht des Fitnessgeräts 1 aus der einerseits die Anordnung der Trittflächen 3.1 auf der Beinantriebsstange 3 und anderseits die Lenkvorrichtung 7 im Detail zu erkennen ist. Die Lenkvorrichtung 7 ist grundsätzlich bezüglich ihrer Form bzw. Gestaltung entsprechend der Anforderungsbedingungen variabel ausführbar. Die

Der Lenkvorrichtung 7 sind Dämpfungselemente 9 zugeordnet, die mit einer Seite am Rahmen 4 und mit der anderen Seite an einer Radaufhängung 12 angeordnet sind, an der wiederum die Vorderräder 6 angeordnet sind. Die Dämpfungselemente 9 sind in einer Ausgestaltung möglichst nah an der jeweiligen Nabe 13 der Vorderräder angeordnet. Die in Fig. 2 gezeigte Ausgestaltung weist Übertragungselemente 14 auf, die einen definierten Abstand einer Seite der Dämpfungselemente 9 von der Radnabe 13 beziehungsweise von einer - der Übersichtlichkeit wegen nicht weiter dargestellten - Drehachse der Vorderräder 6 hält.

Fig. 3 zeigt eine weitere Detailansicht des Fitnessgerätes 1. Deutlich zu erkennen ist die Gelenkverbindung 15 zwischen Armantriebsstange 2 und Beinantriebsstange 3. Weiterhin ist der Fig. 3 ein Klappmechanismus 16 zu entnehmen, der insbesondere verriegelbar ausgestaltet ist.

Die Lenkvorrichtung 7 wird durch Neigung des Rahmens 4 in Relation zur Vorderachse 6 betätigt. Hierzu ist zwischen Vorderachse 6 und Rahmen 4 ein Gelenk 17 angeordnet, das in einer Version ein weiteres hier nicht weiter dargestelltes Dreh-Dämpfungselement aufweist. Auch sind Spurstangen 18 gezeigt, die bei Neigung des Rahmens 4 auf die Vorderradaufhängung 12 wirken.

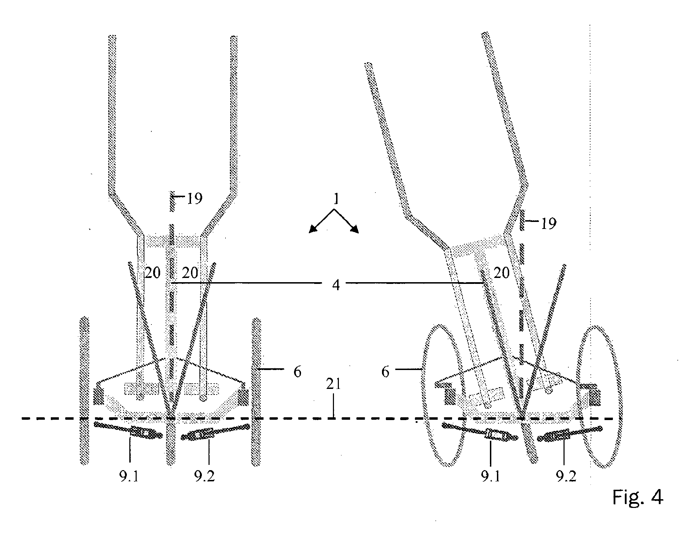

Fig. 4 zeigt zur Verdeutlichung der Funktionsweise der Neigungslenkung eine schematische Zeichnung des Fitnessgeräts 1. Die linke Abbildung zeigt das Fitnessgerät 1 in Ruhelage beziehungsweise bei Geradeausfahrt und die rechte Abbildung zeigt das Fitnessgerät 1 bei Fahrt nach rechts.

Bei Gradeausfahrt befindet sich der Rahmen 4 in einer senkrechten Ebene 19, die orthogonal aus der Bildebene herausragt. Die maximal möglichen Neigungswinkel sind mit dem Bezugszeichen 20 gekennzeichnet, diese betragen vorzugsweise zwischen 5° und 20°, vorzugsweise zwischen 10° und 15°, besonders bevorzugt etwa 11° in beide Richtungen.

Zu erkennen ist, dass bei Geradeausfahrt die Dämpfungselemente 9.1 und 9.2 in einer mittleren Hubposition sind. Bei Neigung des Rahmens um den Neigungswinkel 20 ist das Dämpfungselement 9.1 vollständig ausgezogen, das heißt eine hier nicht weiter bezeichnete Kolbenstange weist einen maximalen Hub auf. Weiterhin weist eine Kolbenstange des Dämpfungselements 9.2 einen minimalen Hub auf. Die Begrenzung des Hubes der Dämpfungselemente 9.1 und 9.2 wirkt in einer Ausgestaltung als Neigungsanschlag, der eine Neigung des Rahmens 4 aus der senkrechten Ebene 19 auf einen maximalen Neigungswinkel 20 begrenzt.

Der Drehpunkt der Neigungslenkung ist in dieser Darstellung an einer sehr tiefen Position angeordnet, vorzugsweise kann er aber auch möglichst weit oben im Bezug zum Untergrund vorgesehen sein. Dies verbessert das Rückstellen in die aufrechte Position um den Drehpunkt. Insbesondere die Figuren 1-3 verdeutlichen, dass ein horizontaler Abschnitt des Rahmens 4 unterhalb des Drehpunkts, also des Gelenks 17 (bezogen auf die Vertikale) angeordnet ist.

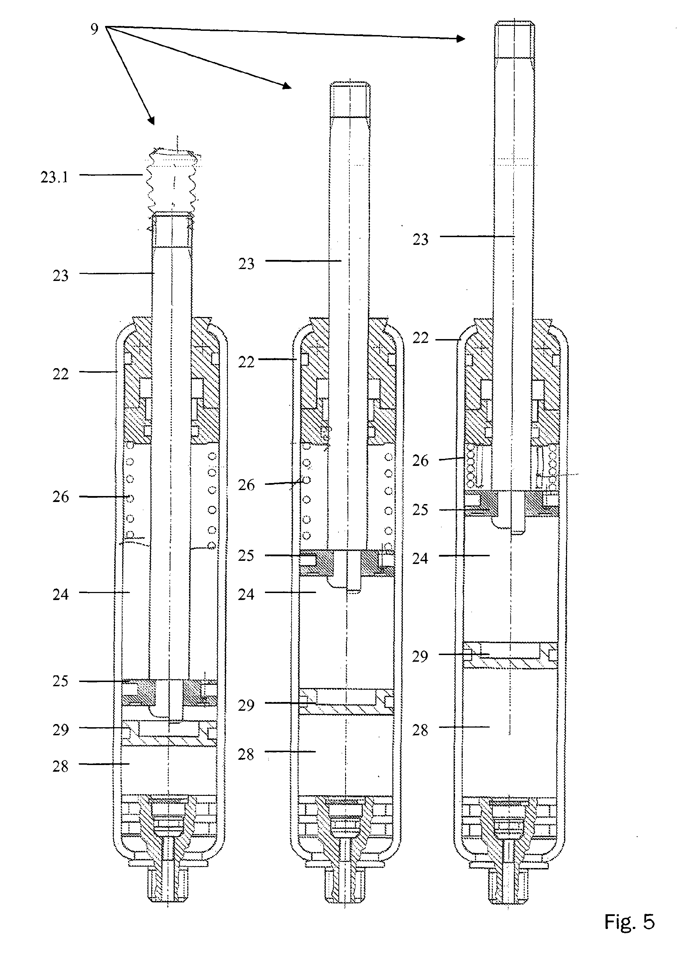

Fig. 5 zeigt ein Dämpfungselement 9 in verschiedenen Hubpositionen. Das Dämpfungselement weist einen Kolben 22 mit einer Kolbenstange 23 auf, die in einer Ausgestaltung - hier beispielhaft in der Darstellung links skizziert - ein Gewinde 23.1 zur Befestigung aufweist. Weiterhin weist das Dämpfungselement 9 eine Ölkammer 24 auf, in der ein an der Kolbenstange 23 angeordneter Dämpfungskolben 25 bewegbar ist. In der Ölkammer befindet sich weiterhin eine Spiralfeder 26, die als Anschlag und Rückstellelement fungiert. Eine Luftkammer 28, die mit einer beweglichen Trennwand 29 von der Ölkammer 24 getrennt ist, sorgt für ein progressives Verhalten des Dämpfungselementes. So wird bei schneller Bewegung des Dämpfungskolbens 25 in Richtung Luftkammer 28, das Gas in der Luftkammer und somit das Öl stark unter Druck gesetzt und durch die hier nicht weiter dargestellten Öffnungen im Dämpfungskolben gepresst. Dies ist in der linken Abbildung der Fig. 5 zu sehen. Bei schneller Bewegung des Dämpfungskolbens 25 in Richtung Spiralfeder wird ein Unterdruck in der Luftkammer 28 erzeugt, der das Öl durch die Öffnungen des Dämpfungskolbens 25 zieht. Dies ist in der rechten Abbildung der Fig. 5 zu sehen. Bei langsamer Bewegung des Dämpfungskolbens 25 wird kaum Druck auf die Luftkammern 28 ausgeübt, so dass das Öl ähnlich wie in einem nicht progressiv ausgestalteten hydraulischen Dämpfer durch die Öffnungen im Dämpfungskolben strömt.

Die mittlere Abbildung der Fig. 5 zeigt den Dämpferkolben vorzugsweise bei Geradeausfahrt des Fitnessgerätes. Die Abbildungen links und rechts zeigen maximale Lenkausschläge. Insbesondere der rechten Abbildung ist zu entnehmen, dass die Spiralfeder 26 bei einem Lenkausschlag gespannt wird. Wird eine Kraft auf die Kolbenstange 23 reduziert, so bewirkt die Spiralfeder 26 ein Zurücklenken in die Geradeausfahrt.

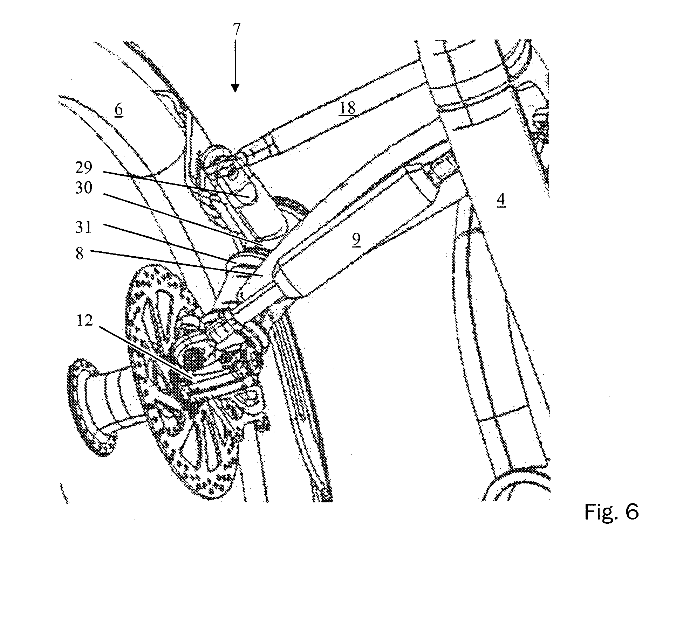

Fig. 6 zeigt eine Detailansicht einer Lenkvorrichtung 7. Die Lenkvorrichtung 7 weist eine Spurstange 18 auf, die bei einer Neigung des Rahmens 4 auf ein Hebelelement 29 wirkt, das wiederum an einem Lenkelement 30 angeordnet ist. Das Lenkelement 30 ist in einer Aufnahme 31 drehbar angeordnet, wobei die Aufnahme 31 an der Vorderradachse 6 angeordnet ist. Des Weiteren umfasst das Lenkelement 30 die Radaufhängung 12, an der das Vorderrad 6 drehbar aufgehängt ist. Zwischen Vorderradaufhängung 12 und Rahmen 4 ist das Dämpfungselement 9 angeordnet.

S. 2 (Beschreibung). Alles was in A 1 steht, ist fix => keine Ausführungsmöglichkeit.

## Patentansprüche

1. Mobiles Fitnessgerät (1), aufweisend:
a. einen Rahmen (4), an dem zwei Vorderräder (6) und ein Hinterrad (5) angeordnet sind,
b. auf beiden Seiten des Rahmens (4) je eine Antriebsvorrichtung, jeweils bestehend aus einer Armantriebsstange (2), die gelenkig mit einer Beinantriebsstange (3) verbunden ist, wobei die Beinantriebsstangen (3) ein Drehmoment über ein Zahnkranz (10) und eine Kette auf das Hinterrad (5) übertragen,
c. eine Lenkvorrichtung (7) zur Lenkung des Fitnessgerätes (1) durch Neigung des Rahmens(4),
d. eine durch Dämpfungselemente (9) gebildete Neigungs/Lenkungsdämpfung, die zwischen den Vorderrädern (6) und dem Rahmen (4) angeordnet ist,
**dadurch gekennzeichnet, dass**
eine Seite der Dämpfungselemente (9) jeweils an einer Radaufhängung (12) angeordnet ist.

2. Mobiles Fitnessgerät (1) nach Anspruch 1, **dadurch gekennzeichnet, dass** zwischen der Radaufhängung (12) und dem Dämpfungselement (9) ein Übertragungselement (14) angeordnet ist.

3. Mobiles Fitnessgerät (1) nach einem der vorhergehenden Ansprüche, **dadurch gekennzeichnet, dass** zumindest ein Dämpfungsparameter der Dämpfungselemente (9) einstellbar ist.

4. Mobiles Fitnessgerät (1) nach einem der vorhergehenden Ansprüche, **dadurch gekennzeichnet, dass** die Dämpfungselemente (9) einen Neigungsanschlag umfassen.

5. Mobiles Fitnessgerät (1) nach Anspruch 4, **dadurch gekennzeichnet, dass** der Neigungsanschlag einstellbar ist.

6. Mobiles Fitnessgerät (1) nach einem der vorhergehenden Ansprüche, **dadurch gekennzeichnet, dass** der Rahmen (4) um 5° bis 20° aus einer senkrechten Ebene (19), die sich entlang einer Längsachse des Fitnessgeräts (1) erstreckt, neigbar ist.

7. Mobiles Fitnessgerät (1) nach einem der vorhergehenden Ansprüche, **dadurch gekennzeichnet, dass** das Fitnessgerät (1) einen Rückstellmechanismus umfasst, zur Rückstellung des Rahmens (4) in die senkrechte Ebene (19).

8. Mobiles Fitnessgerät (1) nach Anspruch 7, **dadurch gekennzeichnet, dass** das Rückstellelement ein Federelement (26) umfasst.

9. Mobiles Fitnessgerät (1) nach einem vorhergehenden Ansprüche, **dadurch gekennzeichnet, dass** der Rahmen (4) des Fitnessgerätes (1) einen vorzugsweise arretierbaren Klappmechanismus (16) umfasst, so dass der Rahmen (4) mittels des Klappmechanismus (16) zusammenlegbar ist.

10. Mobiles Fitnessgerät (1) nach einem der Ansprüche 1 bis 9, **dadurch gekennzeichnet, dass** der Klappmechanismus (16) ein Scharnier aufweist.

11. Mobiles Fitnessgerät (1) nach einem der vorhergehenden Ansprüche, **gekennzeichnet durch** eine Dauerbremse umfasst, mittels der ein Fahrtwiderstand einstellbar ist.

12. Mobiles Fitnessgerät (1) nach einem der Ansprüche 1 bis 11, **dadurch gekennzeichnet, dass** ein horizontaler Abschnitt des Rahmens (4) bezogen auf eine Vertikale unterhalb eines Gelenks (17) der Neigungslenkung angeordnet ist.

## Claims

1. A mobile fitness device (1), having:
a. a frame (4), on which two front wheels (6) and one rear wheel (5) are arranged,
b. in each case one drive device on both sides of the frame (4), each consisting of an arm drive rod (2), which is connected in an articulated manner to a leg drive rod (3), wherein the leg drive rods (3) transmit a torque to the rear wheel (5) via a sprocket wheel (10) and a chain,
c. a steering device (7) for steering the fitness device (1) by inclining the frame (4),
d. an inclination/steering damping system, which is formed by damping elements (9) and is arranged between the front wheels (6) and the frame (4),
**characterised in that**
one side of the damping elements (9) is in each case arranged on a wheel suspension (12).

2. The mobile fitness device (1) according to Claim 1, **characterised in that** a transmission element (14) is arranged between the wheel suspension (12) and the damping element (9).

3. The mobile fitness device (1) according to any one of the preceding claims, **characterised in that** at least one damping parameter of the damping elements (9) can be set.

4. The mobile fitness device (1) according to any one of the preceding claims, **characterised in that** the damping elements (9) comprise an inclination stop.

5. The mobile fitness device (1) according to Claim 4, **characterised in that** the inclination stop can be set.

6. The mobile fitness device (1) according to any one of the preceding claims, **characterised in that** the frame (4) can be inclined by 5° to 20° out of a perpendicular plane (19), which extends along a longitudinal axis of the fitness device (1).

7. The mobile fitness device (1) according to any one of the preceding claims, **characterised in that** the fitness device (1) comprises a restoring mechanism for returning the frame (4) to the perpendicular plane (19).

8. The mobile fitness device (1) according to Claim 7, **characterised in that** the restoring element comprises a spring element (26).

9. The mobile fitness device (1) according to any one of the preceding claims, **characterised in that** the frame (4) of the fitness device (1) comprises a preferably lockable folding mechanism (16), so that the frame (4) can be folded up by means of the folding mechanism (16).

10. The mobile fitness device (1) according to any one of Claims 1 to 9, **characterised in that** the folding mechanism (16) has a hinge.

11. The mobile fitness device (1) according to any one of the preceding claims, **characterised by** a drag brake, by means of which a wind resistance can be set.

12. The mobile fitness device (1) according to any one of Claims 1 to 11, **characterised in that** a horizontal section of the frame (4) is arranged underneath a joint (17) of the inclination steering system in relation to a vertical.

## Revendications

1. Appareil de fitness mobile (1), présentant :
a. un châssis (4) sur lequel deux roues avant (6) et une roue arrière (5) sont disposées,
b. sur chacun des deux côtés du châssis (4) un dispositif d'entraînement, consistant respectivement en une barre d'entraînement de bras (2) qui est reliée par articulation à une barre d'entraînement de jambes (3), les barres d'entraînement de jambes (3) transmettant un couple de rotation via une couronne dentée (10) et une chaîne à la roue arrière (5),
c. un dispositif de braquage (7) pour diriger l'appareil de fitness (1) en inclinant le châssis (4),
d. un amortisseur d'inclinaison/de braquage constitué par des éléments amortisseurs (9) et qui est disposé entre les roues avant (6) et le châssis (4),
**caractérisé en ce**
**qu'**une face des éléments amortisseurs (9) est disposée respectivement sur une suspension des roues (12) ;

2. Appareil de fitness mobile (1) selon la revendication 1, **caractérisé en ce que**, entre la suspension des roues (12) et l'élément amortisseur (9), un élément de transmission (14) est disposé.

3. Appareil de fitness mobile (1) selon une des revendications précédentes, **caractérisé en ce qu'**au moins un paramètre d'amortissement des éléments amortisseurs (9) est réglable.

4. Appareil de fitness mobile (1) selon une des revendications précédentes, **caractérisé en ce que** les éléments amortisseurs (9) comprennent une butée d'inclinaison.

5. Appareil de fitness mobile (1) selon la revendication 4, **caractérisé en ce que** la butée d'inclinaison est réglable.

6. Appareil de fitness mobile (1) selon une des revendications précédentes, **caractérisé en ce que** le châssis (4) est inclinable de 5° à 20° depuis un plan vertical (19) qui s'étend le long d'un axe longitudinal de l'appareil de fitness (1).

7. Appareil de fitness mobile (1) selon une des revendications précédentes, **caractérisé en ce que** l'appareil de fitness (1) comprend un mécanisme de retour pour ramener le châssis (4) dans le plan vertical (19).

8. Appareil de fitness mobile (1) selon la revendication 7, **caractérisé en ce que** le mécanisme de retour comprend un élément à ressort (26).

9. Appareil de fitness mobile (1) selon une des revendications précédentes, **caractérisé en ce que** le châssis (4) de l'appareil de fitness (1) comprend un mécanisme de rabattement de préférence blocable (16) pour que le châssis (4) puisse être replié au moyen du mécanisme de rabattement (16).

10. Appareil de fitness mobile (1) selon une des revendications 1 à 9, **caractérisé en ce que** le mécanisme de rabattement (16) présente une charnière.

11. Appareil de fitness mobile (1) selon une des revendications précédentes, **caractérisé par** un frein d'endurance qui permet de régler une résistance au roulement.

12. Appareil de fitness mobile (1) selon une des revendications 1 à 11, **caractérisé en ce qu'**une section horizontale du châssis (4) est disposée par rapport à la verticale en dessous d'une articulation (17) de la direction d'inclinaison.
